(19) Europäisches Patentamt
European Patent Office
Office européen des brevets

(11) EP 4 769 515 A1

(12) EUROPEAN PATENT APPLICATION
published in accordance with Art. 153(4) EPC

(43) Date of publication:
01.07.2026 Bulletin 2026/27

(21) Application number: 24872943.6

(22) Date of filing: 26.09.2024

(51) International Patent Classification (IPC):
H01M 4/131 (2010.01)    H01M 4/525 (2010.01)
H01M 4/505 (2010.01)    H01M 10/052 (2010.01)
H01M 4/02 (2006.01)

(52) Cooperative Patent Classification (CPC):
H01M 4/02; H01M 4/131; H01M 4/505;
H01M 4/525; H01M 10/052; Y02E 60/10

(86) International application number:
PCT/KR2024/014564

(87) International publication number:
WO 2025/071235 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 26.09.2023 KR 20230129758

(71) Applicant: SK On Co., Ltd.
Seoul 03161 (KR)

(72) Inventors:
• DO, Young Hoon
Daejeon 34124 (KR)
• NOH, Mi Jung
Daejeon 34124 (KR)
• KIM, Hong Ki
Daejeon 34124 (KR)

(74) Representative: Prüfer & Partner mbB
Patentanwälte · Rechtsanwälte
Sohnckestraße 12
81479 München (DE)

(54) POSITIVE ELECTRODE FOR LITHIUM SECONDARY BATTERY, AND LITHIUM SECONDARY BATTERY

(57) A positive electrode for a lithium secondary battery according to embodiments of the present disclosure comprises a positive electrode active material layer containing a positive electrode active material and having a density of 3 g/cm$^3$ or more, wherein the positive electrode active material includes lithium metal oxide particles containing cobalt, the content of cobalt being 0 mol% (exclusive) to 15 mol% (inclusive) relative to the total number of moles of elements excluding lithium and oxygen. The difference between the charge/discharge efficiency and the charge/discharge efficiency after 10 additional charge/discharge cycles in a half-cell comprising the positive electrode for a lithium secondary battery is less than 1%.

FIG. 1

100

EP 4 769 515 A1

**Description**

[TECHNICAL FIELD]

The disclosure provides a cathode for a lithium secondary battery and a lithium secondary battery.

[BACKGROUND ART]

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as a power source of eco-friendly vehicle such as a hybrid vehicle.

Examples of the secondary battery include a lithium secondary battery, a nickelcadmium battery, a nickel-hydrogen battery, etc. The lithium secondary battery among the secondary batteries is being actively developed due to high operational voltage and energy density per unit weight, a high charging rate, a compact dimension, etc.

An NCM-based active material containing nickel, cobalt and manganese is used as a cathode active material of the lithium secondary battery. For example, as an application range of the lithium secondary battery is expanded to a large-scaled device such as an electric vehicle, a high-nickel (High-Ni) lithium oxide having an increased nickel content is known as a cathode active material for achieving a high capacity.

However, as the content of nickel in the cathode active material increases, structural stability of active material particles may be deteriorated. For example, a cation mixing where nickel cations migrate to lithium sites may be caused to decrease stability and life-span property during repeated charge and discharge operation of the lithium secondary battery.

Developments of a battery including a high-nickel cathode active material to provide higher capacity while also having high stability to maintain a performance even in extreme environments are needed.

DETAILED DESCRIPTIONS OF THE INVENTION

[Technical Objective]

According to an objective of the present disclosure, there is provided a cathode for a lithium secondary battery having improved electrochemical properties.

According to an objective of the present disclosure, there is provided a lithium secondary battery having improved electrochemical properties.

[Means for Resolving the Objective]

A cathode for a lithium secondary battery according to the present disclosure includes a cathode active material layer that includes a cathode active material and has a density of 3 $g/cm^3$ or more. The cathode active material includes a lithium metal oxide particle, and the lithium metal oxide particle includes cobalt and a content of cobalt based on total moles of elements excluding lithium and oxygen is greater than 0, and less than or equal to 15 mol%. The cathode for a lithium secondary battery satisfies Formula 1 below.

$$[\text{Formula 1}]$$

$$(E_n\text{-}E_{n+10}) < 1\ \%$$

In Formula 1, $E_n$ is a charge and discharge efficiency (%) measured after repeating a charge and discharge cycle n times of a half-cell including an anode, the cathode for a lithium secondary battery, a separator and an electrolyte solution within an exterior material of a dimension having a diameter of 20 mm and a height of 1.6 mm, and $E_{n+10}$ is a charge and discharge efficiency (%) measured after repeating the charge and discharge cycle n+10 times of the half-cell. The charging/discharging cycle is performed by CC-CV charge under conditions of 0.5C CC 4.3V 0.05C CV cut, rest for 10 minutes, and CC discharge under 0.5C CC conditions. The anode is a lithium foil having a circular shape having a diameter of $\Phi$ 16 and a thickness of 1.2 $\mu$m, the cathode for a lithium secondary battery has a circular shape having a diameter of $\Phi$ 14, the separator is interposed between the anode and the cathode for a lithium secondary battery and is a polyethylene film having a thickness of 13 $\mu$m, and the electrolyte solution is prepared by dissolving 1M $LiPF_6$ in a mixed solvent including ethylene carbonate and ethylmethyl carbonate in a volume ratio of 3:7. The charge and discharge efficiency is defined as a percentage of a charge capacity to a discharge capacity measured after repeating the predetermined number of the charge and discharge cycles, and n is an integer of 5 to 100.

In example embodiments, the cathode for a lithium secondary battery may satisfy Formula 2 below.

$$[\text{Formula 2}]$$

$$(E_n - E_{n+10}) \leq 0.3\%$$

In example embodiments, the content of cobalt may be in a range from 1 mol% to 12 mol% based on the total moles of elements excluding lithium and oxygen.

In example embodiments, a total content of lithium carbonate ($Li_2CO_3$) and lithium hydroxide (LiOH) remaining on a surface of the lithium metal oxide particle may be 5000 ppm or less.

In example embodiments, the lithium metal oxide particle may further include nickel and manganese.

In example embodiments, a content of nickel may be in a range from 70 mol% to 95 mol% based on the total moles of elements excluding lithium and oxygen.

In example embodiments, a content of manganese may be in a range from 5 mol% to 30 mol% based on the total moles of elements excluding lithium and oxygen.

In example embodiments, a peak may not be observed within a 20 range of 20° to 22° in a result of an X-ray diffraction (XRD) analysis of the lithium metal oxide particle.

In example embodiments, when n is 5 to 20, $E_n$ may be 99.7% or more.

In example embodiments, when n is 5 to 20, $E_{n+10}$ may be 99% or more.

In example embodiments, n is 45 to 60, $E_n$ may be 89.5% or more.

In example embodiments, when n is 45 to 60, $E_{n+10}$ may be 88.6% or more.

In example embodiments, a density of the cathode active material layer may be in a range from 3.3 g/cm$^3$ to 5 g/cm$^3$.

A lithium secondary battery according to the present disclosure includes the cathode for a lithium secondary battery, and an anode opposing the cathode.

[Effects of the Invention]

A cathode for a lithium secondary battery according to example embodiments of the present disclosure may have improved high-temperature life-span properties, and thus a battery maintaining high capacity even during repeated charge and discharge cycles at high temperature may be implemented.

The cathode for a lithium secondary battery according to example embodiments of the present disclosure may include a cathode active material having high stability even when being stored at high temperature for an extended period. Accordingly, side reactions between the cathode active material and an electrolyte solution may be suppressed, and an amount of gas generated in the battery when the battery is stored at high temperature may be reduced.

The lithium secondary battery according to example embodiments of the present disclosure may include the cathode to have improved high-temperature life-span an high-temperature storage properties.

[Brief Descriptions of the Drawings]

FIG. 1 is a schematic cross-sectional view illustrating a cathode for a lithium secondary battery according to example embodiments.

FIGS. 2 and 3 are a schematic plan view and a schematic cross-sectional view, respectively, of a lithium secondary battery according to example embodiments.

[Implementation for Practicing the Invention]

According to the present disclosure, a cathode for a lithium secondary battery including a cathode active material that includes a lithium metal oxide particle in which a cobalt content is greater than 0 and 15 mol% or less based on a total number of moles of elements excluding lithium and oxygen, and a lithium secondary battery including the same are provided.

Hereinafter, embodiments of the present disclosure will be described in detail. However, these embodiments are merely provided as examples the present disclosure is not limited to the specific embodiments described herein.

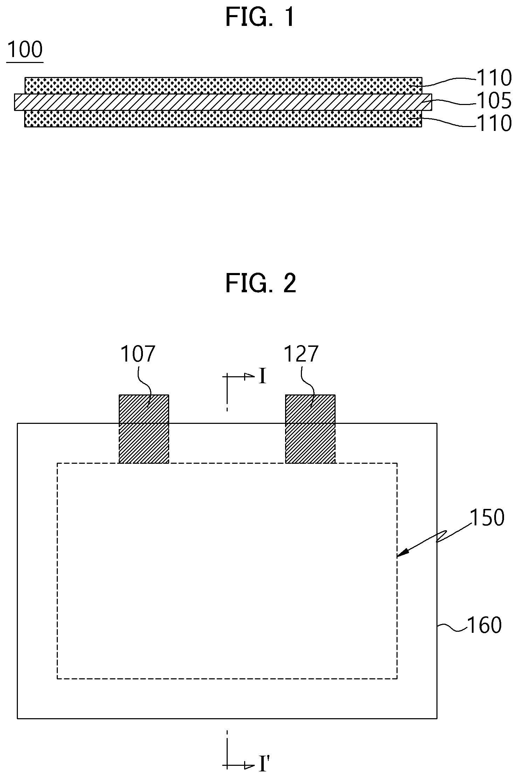

FIG. 1 is a schematic cross-sectional view illustrating a cathode for a lithium secondary battery according to example embodiments.

Referring to FIG. 1, a cathode for a lithium secondary battery (hereinafter, that may be abbreviated to as a cathode) may include a cathode current collector 105 and a cathode active material layer 110. The cathode 100 may include a cathode current collector 105 and a cathode active material layer 110 formed on at least one surface of the cathode current collector 105. The cathode active material layer 110 may include a cathode active material.

The cathode active material includes lithium metal oxide particles. The lithium metal oxide particle may include a metal component including at least one metal in addition to lithium and oxygen.

The lithium metal oxide particle include cobalt. Cobalt has a higher electrical conductivity than those of other metal components included in the lithium metal oxide particle, e.g., nickel and/or manganese to increase a transfer rate of electrons through the lithium metal oxide.

A content of cobalt is greater than 0 and less than or equal to 15 mol% based on total moles of elements excluding lithium and oxygen. In some embodiments, the content of cobalt may be in a range from 1 mol% to 12 mol%, or from 1 mol% to 10 mol% based on the total moles of elements excluding lithium and oxygen.

If the lithium metal oxide particle does not contain cobalt, an electrical conductivity of the cathode active material may be significantly reduced to lower charging and discharging rate of the lithium secondary battery. Further, stability of a layered structure of the lithium metal oxide particle may be degraded.

If the lithium metal oxide particle contain cobalt in an amount greater than 15 mol%, a content of other metals (e.g., nickel or manganese) may be relatively reduced to reduce capacity or stability of the lithium secondary battery. Further, a unit price per capacity of the cathode active material may increase to degrade a productivity.

In some embodiments, the lithium metal oxide particle may further include nickel and manganese. Nickel may be provided as a transition metal related to a power and a capacity of the lithium secondary battery. Thus, when the lithium metal oxide has a high content of nickel (High-Ni), a high-capacity cathode and a high-capacity lithium secondary battery may be provided.

However, as the nickel content increases, long-term storage stability and life-span stability of the cathode or the secondary battery may relatively decrease, and side reactions with an electrolyte solution may also be increased. In example embodiments, the lithium metal oxide particle may further include manganese to improve life-span stability of the battery.

In example embodiments, the content of nickel may be in a range from 70 mol% to 95 mol% based on the total moles of elements other than lithium and oxygen. In some embodiments, the content of nickel may be in a range from 75 mol% to 90 mol%, or 75 mol% to 85 mol% based on the total moles of elements other than lithium and oxygen. In the above range, the capacity may be increased while achieving stability of the lithium secondary battery.

In example embodiments, a content of manganese may be in a range from 5 mol% to 30 mol% based on the total moles of elements other than lithium and oxygen. In some embodiments, the content of manganese may be in a range from 5 mol% to 25 mol% based on the total moles of elements other than lithium and oxygen. In the above range, long-term stability of the lithium metal oxide particle having the high content of nickel (high-Ni) composition may be improved.

The lithium metal oxide particle may include a layered structure or a crystal structure including nickel, cobalt and manganese. The lithium metal oxide particle may further include an auxiliary element other than nickel, cobalt and manganese, and may be included in the form of a coating element and/or a doping element in the lithium metal oxide particle. The auxiliary element may include, e.g., Na, Mg, Ca, Y, Ti, Hf, V, Nb, Ta, Cr, Mo, W, Fe, Cu, Ag, Zn, B, Al, Ga, C, Si, Sn, Sr, Ba, Ra, P, Zr, or the like.

When the lithium metal oxide particle includes the auxiliary element in the form of a coating element, the auxiliary element may be present on a surface of the lithium metal oxide particle.

When the lithium metal oxide particle includes the auxiliary element in the form of a doping element, the auxiliary element may penetrate through the surface of the lithium metal oxide particle, and may be incorporated together in the layered structure/crystal structure to form a bond.

The lithium metal oxide particle may have a layered structure or a crystal structure represented by Chemical Formula 1.

[Chemical Formula 1]    $Li_xNi_aCo_bMn_cM1_dO_{2+z}$

In Chemical Formula 1, $0.9 \leq x \leq 1.2$, $0.7 \leq a \leq 0.95$, $0 < b \leq 0.15$, $0.05 \leq c \leq 0.3$, $0 \leq d \leq 0.1$, and $-0.5 \leq z \leq 0.1$. M1 may be used as the auxiliary element, and may include at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr.

A content of the lithium metal oxide particles based on a total weight of the cathode active material may be 50 wt% or more. In some embodiments, the content of the lithium metal oxide particles based on the total weight of the cathode active material may be 60 wt% or more, 70 wt% or more, 80 wt% or more, 90 wt% or more, or 99 wt% or more. For example, the cathode active material may substantially consist of the lithium metal oxide particles.

In some embodiments, the cathode active material may include a lithium cobalt oxide-based active material, a lithium manganese oxide-based active material, a lithium nickel oxide-based active material, a lithium iron phosphate-based (LFP) active material (e.g., $LiFePO_4$), or the like.

The lithium metal oxide particle may include a residual lithium on the surface of the particle. For example, an excessive amount of a lithium source (lithium salt) may be used to improve yield or stability of a synthesis process in a process of preparing the lithium metal oxide particle. The residual lithium may be a residue of the lithium source or a side reaction product of the lithium source. The residual lithium may include lithium carbonate ($Li_2CO_3$) and/or lithium hydroxide (LiOH).

In example embodiments, a total content of lithium carbonate ($Li_2CO_3$) and lithium hydroxide (LiOH) remaining on the surface of the lithium metal oxide particle may be 5,000 ppm or less. In some embodiments, the total content of lithium carbonate ($Li_2CO_3$) and lithium hydroxide (LiOH) remaining on the surface of the lithium metal oxide particle may be 4800 ppm or less, or 4600 ppm or less.

In the above range, an amount of the residual lithium inhibiting the electrical conductivity of the lithium metal oxide particle may become small, so that a resistance of the battery may not be increased, and degradation of power properties of the battery may be prevented.

In example embodiments, in a result of an X-ray diffraction (XRD) analysis of the lithium metal oxide particle, a peak may not be observed in a range of 2θ from 20° to 22°. Accordingly, the cathode including the lithium metal oxide particle with a crystal structure having of high stability and having improved life-span properties may be implemented

The XRD analysis may be performed at a scan rate of 0.0065°/step in a diffraction angle (2θ) range of 10° to 120° using a Cu Kα ray as a light source with respect to a dry powder of the lithium metal oxide particle.

In example embodiments, a density of the cathode active material layer may be 3 g/cm³ or more. In some examples, the density of the cathode active material layer may be in a range from 3.3 g/cm³ to 5 g/cm³ or more. In the above range, high charging and discharging efficiency may be maintained even when the battery is repeatedly charged and discharged, and life-span properties of the battery may be improved.

If the density of the cathode active material layer is less than 3 g/cm³, structural stability of the cathode active material layer may be significantly reduced during repeated charging and discharging of the battery, and charging and discharging efficiency of the battery may be significantly reduced.

In example embodiments, , the cathode for a lithium secondary battery satisfies Formula 1 below.

$$[\text{Formula 1}]$$

$$(E_n - E_{n+10}) < 1\ \%$$

In Formula 1, $E_n$ is a charge and discharge efficiency (%) measured after repeating a charge and discharge cycle n times of a half-cell including an anode, the cathode for the lithium secondary battery, a separator and an electrolyte solution within an exterior material of a dimension having a diameter of 20 mm and a height of 1.6 mm, and $E_{n+10}$ is a charge and discharge efficiency (%) measured after repeating the charge/discharge cycle (n+10) times of the half-cell.

The charging and discharging cycle is performed by CC-CV charge under conditions of 0.5C CC 4.3V 0.05C CV cut, rest for 10 minutes, and CC discharge under 0.5C CC conditions.

The anode is a lithium foil having a circular shape having a diameter of Φ 16 and a thickness of 1.2 μm, and the cathode for a lithium secondary battery has a circular shape having a diameter of Φ 14. The separator is interposed between the anode and the cathode for a lithium secondary battery, and is a polyethylene film having a thickness of 13 μm. The electrolyte solution is prepared by dissolving 1M $LiPF_6$ in a mixed solvent including ethylene carbonate and ethylmethyl carbonate in a volume ratio of 3:7.

The charge and discharge efficiency is defined as a percentage of a charge capacity to a discharge capacity measured after repeating the predetermined number of the charge and discharge cycles, and n is an integer of 5 to 100.

The charging and discharging efficiency of the half-cell including the cathode for a lithium secondary battery and the lithium foil anode may decrease as the charging/discharging is repeated. The charging and discharging efficiency of the half-cell may have a difference value less than 1% between the charging and discharging efficiency after n cycles of the charging/discharging and the charging and discharging efficiency after (n+10) cycles of the charging/discharging. In some embodiments, the ($E_n - E_{n+10}$) value of Formula 1 may be 0.9 % or less, 0.8 % or less, 0.7 % or less, 0.6 % or less, or 0.3 % or less.

When the difference of the charge and discharge efficiencies is 1% or more, long-term life-span properties of the cathode may be deteriorated, and the life-span of the cathode and the lithium secondary battery may be shortened, especially in a high-temperature environment. Additionally, when the battery is stored in the high-temperature environment, side reactions between the electrolyte solution and the cathode active material may increase to generate a large amount of gas and increase risk of explosion due to a battery expansion.

The cathode for a lithium secondary battery according to embodiments may satisfy Formula 2 below.

[Formula 2]

$$(E_n - E_{n+10}) \leq 0.3\%$$

In example embodiments, when n is 5 to 20, $E_n$ may be 99.7% or more, and $E_{n+10}$ may be 99% or more.

In example embodiments, when n is 45 to 60, $E_n$ may be 89.5% or more, and $E_{n+10}$ may be 88.6% or more.

In the above range, the lithium secondary battery having improved high-temperature life-span properties and high-temperature storage properties, and having a reduced amount of gas generated from an inside of the battery during high-temperature storage may be implemented.

In example embodiments, a method of manufacturing the lithium metal oxide particle may be provided.

In example embodiments, an active material metal source may be prepared. The active material metal source may include a nickel source and a cobalt source. For example, a manganese source may be additionally used together.

Examples of the nickel source may include nickel sulfate ($NiSO_4$), nickel hydroxide ($Ni(OH)_2$), nickel nitrate ($Ni(NO_3)_2$), nickel acetate ($Ni(CH_3CO_2)_2$, a hydrate thereof, or the like. Examples of the manganese source may include manganese sulfate ($MnSO_4$), manganese hydroxide ($Mn(OH)_2$), manganese nitrate ($Mn(NO_3)_2$), manganese acetate ($Mn(CH_3CO_2)_2$), a hydrate thereof, or the like. Examples of the cobalt source may include cobalt sulfate ($CoSO_4$), cobalt hydroxide ($Co(OH)_2$), cobalt nitrate ($Co(NO_3)_2$), cobalt carbonate ($CoCO_3$), a hydrate thereof, or the like.

For example, nickel sulfate, manganese sulfate and cobalt sulfate may be used as the nickel source, the manganese source and the cobalt source, respectively.

In example embodiments, the above-described active material metal salts may be mixed and reacted through, e.g., a co-precipitation method to obtain an active material precursor. For example, the active material precursor may be prepared in the form of a nickel-manganese-cobalt hydroxide.

A precipitating agent and/or a chelating agent may be used to promote the coprecipitation reaction. The precipitating agent may include an alkaline compound such as sodium hydroxide (NaOH), sodium carbonate ($Na_2CO_3$), or the like. The chelating agent may include, e.g., ammonia water, ammonium carbonate, or the like.

The active material precursor may be mixed with a lithium source and reacted through a heat treatment (firing) to prepare lithium-metal oxide particles. For example, a temperature of the heat treatment may be adjusted in a range of about 800 °C to 1100 °C, and a heat treatment time may be adjusted in a range of about 3 hours to 50 hours.

The lithium source may include, e.g., lithium carbonate ($Li_2CO_3$), lithium nitrate ($LiNO_3$), lithium acetate ($CH_3COOLi$), lithium oxide ($Li_2O$), lithium hydroxide (LiOH), or the like. These may be used alone or in a combination of two or more therefrom. For example, lithium hydroxide and/or lithium carbonate may be used as the lithium source.

After the heat treatment, a residual lithium such as an unreacted lithium source remaining on the surface of the particles may be removed by washing with an aqueous solvent or an organic solvent.

In an embodiment, a post-firing process may be further performed after the washing process. The post-firing process may be performed at a temperature of, e.g., about 250 to 500 °C.

The cathode active material may be mixed and stirred with a binder, a conductive material, and/or a dispersant in a solvent to prepare a slurry. The slurry may be coated on the cathode current collector 105, and then dried and pressed to prepare the cathode 100.

The cathode current collector 105 may include, e.g., stainless steel, nickel, aluminum, titanium, copper, or an alloy thereof, and may include, e.g., aluminum or an aluminum alloy.

The binder may include, e.g., an organic binder such as vinylidene fluoride-hexafluoropropylene copolymer (PVDF-co-HFP), polyvinylidene fluoride (PVDF), polyacrylonitrile, polymethylmethacrylate, or the like, or an aqueous binder such as styrene-butadiene rubber (SBR) that may be used together with a thickener such as carboxymethyl cellulose (CMC).

For example, a PVDF-based binder may be used as the cathode binder. In this case, an amount of the binder for forming the cathode active material layer may be reduced and an amount of the cathode active material may be relatively increased, thereby improving the power and the capacity of the secondary battery.

The conductive material may be included to promote electron transfer between active material particles. For example, the conductive material may include a carbon-based conductive material such as graphite, carbon black, graphene, carbon nanotube, or the like, and/or a metal-based conductive material including tin, tin oxide, titanium oxide, a perovskite material such as $LaSrCoO_3$, $LaSrMnO_3$, or the like.

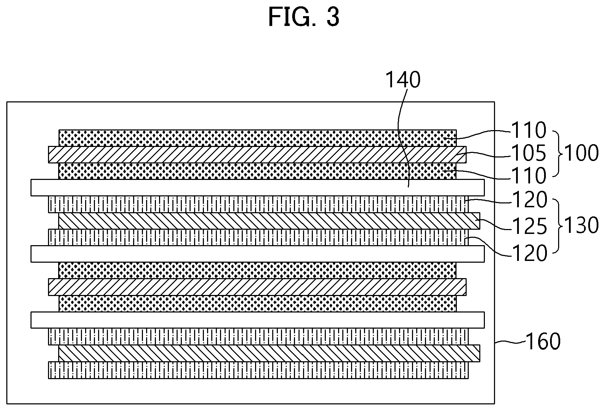

FIGS. 2 and 3 are a schematic plan view and a schematic cross-sectional view, respectively, illustrating a lithium secondary battery according to example embodiments. For example, FIG. 3 is a cross-sectional view taken along a line I-I' of FIG. 2 in a thickness direction.

Hereinafter, the cathode for the lithium secondary battery and the lithium secondary battery including the same will be described with reference to FIGS. 2 and 3.

Referring to FIGS. 2 and 3, the lithium secondary battery may include an electrode assembly including the cathode 100, an anode 130, and a separator 140 interposed between the cathode and the anode, and the electrode

EP 4 769 515 A1

assembly may be accommodated in a case 160 together with an electrolyte to be impregnated therein.

The cathode 100 is a cathode for a lithium secondary battery including the cathode active material including the above-described lithium metal oxide particle.

The anode 130 may include an anode current collector 125 and an anode active material layer 120 formed on the anode current collector 125 and including an anode active material.

In example embodiments, the anode 130 may include a carbon-based active material. The carbon-based active material may include a crystalline carbon, an amorphous carbon, a carbon composite, a carbon fiber, or the like.

For example, the amorphous carbon may include hard carbon, coke, a mesocarbon microbeads, a mesophase pitch-based carbon fiber, or the like. For example, the crystalline carbon may include natural graphite, artificial graphite, a graphitized coke, a graphitized MCMB, a graphitized MPCF, or the like.

Preferably, natural graphite and/or artificial graphite may be used as the carbon-based active material.

In some embodiments, the cathode active material may further include a silicon-based active material. For example, the silicon-based active material may include Si, SiOx (0<x<2), a silicon-carbon composite, a metal-doped silicate, or the like.

The silicon-based active material may provide a significantly higher capacity than that of, e.g., the carbon-based material. However, the silicon-based active material may be excessively expanded in a high-temperature environment or when charging/discharging is repeated, thereby deteriorating battery stability.

Accordingly, the carbon-based active material may be used together with the silicon-based active material as the anode active material.

To prevent instability due to a battery expansion, an amount of the carbon-based active material (e.g., a graphite-based active material) may be greater than an amount of the silicon-based active material based on a total weight of the anode active material.

In example embodiments, a content of a silicon element based on a total weight of a carbon element (C) and the silicon element (Si) included in the anode active material may be in a range from 1 wt% to 10 wt%. In the above range, a high capacity/high stability structure may be provided even in the anode according to the above-described high capacity/high stability design of the cathode.

In some embodiments, a content of the silicon element based on the total weight of the anode active material may be in a range from 1 wt% to 9 wt%, from 1 wt% to 8 wt%, from 1 wt% to 7 wt%, from 1 wt% to 6 wt%, or from 1 wt% to 5 wt%.

For example, a slurry may be prepared by mixing and stirring the anode active material with the above-described binder, conductive material, thickener, or the like, in a solvent. The slurry may be coated on at least one surface of the anode current collector 125, and then dried and pressed to prepare the anode 130.

Materials substantially the same as or similar to the above-described materials used in the cathode active material layer 110 may be used as the binder and the conductive material. In some embodiments, the binder for forming the anode may include an aqueous binder such as styrene-butadiene rubber (SBR) for compatibility with the carbon-based active material, and may be used together with the thickener such as carboxymethyl cellulose (CMC).

The separator 140 may be interposed between the cathode 100 and the anode 130. The separator 140 may include a porous polymer film formed of a polyolefin-based polymer such as an ethylene homopolymer, a propylene homopolymer, an ethylene/butene copolymer, an ethylene/hexene copolymer, an ethylene/methacrylate copolymer, or the like. The separator 140 may include a nonwoven fabric formed of a glass fiber having a high melting point, a polyethylene terephthalate fiber, or the like.

In some embodiments, an area (e.g., a contact area with the separator 140) and/or a volume of the anode 130 may be larger than that of the cathode 100. Accordingly, transfer of lithium ions generated from the cathode 100 to the cathode 130 may be facilitated without, e.g., being deposited.

In example embodiments, an electrode cell may be defined by the cathode 100, the anode 130 and the separator 140, and a plurality of the electrode cells may be stacked to form, e.g., an electrode assembly 150 in the form of a jelly roll. For example, the electrode assembly 150 may be formed by winding, lamination, folding, or the like, of the separator 140.

The electrode assembly 150 may be accommodated together with an electrolyte in the case 160 to define a lithium secondary battery. In example embodiments, a non-aqueous electrolyte solution may be used as the electrolyte.

The non-aqueous electrolyte solution may include a lithium salt as an electrolyte and an organic solvent, and the lithium salt may be represented as, e.g., as $Li^+X^-$. Examples of an anion (X-) of the lithium salt may include $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, or the like.

As the organic solvent, e.g., propylene carbonate (PC), ethylene carbonate (EC), diethyl carbonate (DEC), dimethyl carbonate (DMC), ethylmethyl carbonate (EMC), methylpropyl carbonate, dimethyl sulfoxide, acetonitrile, dimethoxyethane, diethoxyethane, vinylene carbonate, sulfolane, gamma-butyrolactone, propylene sulfite, tetrahydrofuran, or the like. These may be used alone or in a combination of two or more therefrom.

As illustrated in FIG. 2, electrode tabs (a cathode tab and an anode tab) may protrude from the cathode collector 105 and the anode collector 125 included in each electrode cell and extend to one side of the case 160. The electrode tabs may be fused together with the one side of the case 160 to be connected to electrode leads (a cathode lead 107 and an anode lead 127) that may extend or may be exposed to an outside of the case 160.

The lithium secondary battery may be manufactured in, e.g. a cylindrical shape using a can, a prismatic shape, a pouch shape, or a coin shape.

Embodiments of the present disclosure described above include the following aspects, and may be implemented from at least one of the following aspects.

A cathode for a lithium secondary battery according to a 1st aspect of the present disclosure includes a cathode active material layer that includes a cathode active material and has a density of 3 $g/cm^3$ or more. The cathode active material includes a lithium metal oxide particle, and the lithium metal oxide particle includes cobalt and a content of cobalt based on total moles of elements excluding lithium and oxygen is greater than 0, and less than or equal to 15 mol%. The cathode for a lithium secondary battery satisfies Formula 1 below.

$$[\text{Formula 1}]$$

$$(E_n - E_{n+10}) < 1 \%$$

In Formula 1, $E_n$ is a charge and discharge efficiency (%) measured after repeating a charge and discharge cycle n times of a half-cell including an anode, the cathode for a lithium secondary battery, a separator and an electrolyte solution within an exterior material of a dimension having a diameter of 20 mm and a height of 1.6 mm, and $E_{n+10}$ is a charge and discharge efficiency (%) measured after repeating the charge and discharge cycle n+10 times of the half-cell. The charging/discharging cycle is performed by CC-CV charge under conditions of 0.5C CC 4.3V 0.05C CV cut, rest for 10 minutes, and CC discharge under 0.5C CC conditions. The anode is a lithium foil having a circular shape having a diameter of Φ 16 and a thickness of 1.2 μm, the cathode for a lithium secondary battery has a circular shape having a diameter of Φ 14, the separator is interposed between the anode and the cathode for a lithium secondary battery and is a polyethylene film having a thickness of 13 μm, and the electrolyte solution is prepared by dissolving 1M $LiPF_6$ in a mixed solvent including ethylene carbonate and ethylmethyl carbonate in a volume ratio of 3:7. The charge and discharge efficiency is defined as a percentage of a charge capacity to a discharge capacity measured after repeating the predetermined number of the charge and discharge cycles, and n is an integer of 5 to 100.

In the 1st aspect, the cathode for a lithium secondary battery according to a 2nd aspect may satisfy Formula 2 below.

$$[\text{Formula 2}]$$

$$(E_n - E_{n+10}) \leq 0.3\%$$

In the 1st aspect or the 2nd aspect, according to a 3rd aspect, the content of cobalt may be in a range from 1 mol% to 12 mol% based on the total moles of elements excluding lithium and oxygen.

In any one of the 1st to 3rd aspects, according to a 4th aspect, a total content of lithium carbonate ($Li_2CO_3$) and lithium hydroxide (LiOH) remaining on a surface of the lithium metal oxide particle may be 5000 ppm or less.

In any one of the 1st to 4th aspects, according to a 5th aspect, the lithium metal oxide particle may further include nickel and manganese.

In any one of the 1st to 5th aspects, according to a 6th aspect, a content of nickel may be in a range from 70 mol% to 95 mol% based on the total moles of elements excluding lithium and oxygen.

In the 5th aspect or the 6th aspect, according to a 7th aspect, a content of manganese may be in a range from 5 mol% to 30 mol% based on the total moles of elements excluding lithium and oxygen.

In any one of the 1st to 7th aspects, according to a 8th aspect, a peak may not be observed within a 2θ range of 20° to 22° in a result of an X-ray diffraction (XRD) analysis of the lithium metal oxide particle.

In any one of the 1st to 8th aspects, according to a 9th aspect, when n is 5 to 20, $E_n$ may be 99.7% or more.

In any one of the 1st to 9th aspects, according to a 10th aspect, when n is 5 to 20, $E_{n+10}$ may be 99% or more.

In any one of the 1st to 10th aspects, according to a 11th aspect, n is 45 to 60, $E_n$ may be 89.5% or more.

In any one of the 1st to 11th aspects, according to a 12th aspect, when n is 45 to 60, $E_{n+10}$ may be 88.6% or more.

In any one of the 1st to 12th aspects, according to a 13th aspect, a density of the cathode active material layer is may be a range from 3.3 $g/cm^3$ to 5 $g/cm^3$.

A lithium secondary battery according to a 13th aspect of the present disclosure includes the cathode for a lithium secondary battery according to any one of the 1st to 13th aspects, and an anode opposing the cathode.

Hereinafter, embodiments of the present disclosure will be further described with reference to specific experimental examples. Examples and comparative examples included in the experimental examples provides merely examples of the present disclosure and do not limit the appended claims. It is clear to those skilled in the art that various changes and modifications to embodiments are possible within the scope of the present disclosure and technical ideas, and such changes and modifications are included in the scope of the appended claims.

Preparation Example 1

$NiSO_4$, $CoSO_4$, and MnSO4 were mixed in a ratio of 0.76:0.01:0.23 using distilled water from which internal dissolved oxygen was removed by bubbling with $N_2$ for 24 hours. The mixed solution was introduced into a reactor at 50°C, and NaOH and $NH_3H_2O$ were added as a precipitating agent and a chelating agent, respectively. Subsequently, a co-precipitation reaction was carried out for 72 hours to obtain $Ni_{0.76}Co_{0.01}Mn_{0.23}(OH)_2$ as a transition metal precursor. The obtained precursor was dried at 100 °C for 12 hours, and then re-dried at 120 °C for 10 hours.

A mixed lithium raw material prepared by mixing lithium hydroxide and lithium carbonate in a ratio of 1:1 was added to a dry high-speed mixer such that the molar ratio of Li and the metals of the transition metal precursor became 1.03:1, and the mixture was uniformly mixed for 10 minutes. The mixture was placed in a ceramic crucible and loaded in a box-type kiln. A temperature was increased to 780 °C at a heating rate of 2 °C/min, and a first maintenance for 12 hours was conducted. Thereafter, a temperature was increased again to 900 °C at a heating rate of 2 °C/min, and a second maintenance for 12 hours was conducted. Subsequently, the mixture was left in the kiln to be cooled naturally to 50 °C.

Oxygen was passed continuously at a flow rate of 10 mL/min during the heating, maintaining and cooling stages. After the firing was completed, the calcined material was separated from the ceramic crucible, and pulverized using an Air Classifier Mill (ACM). Subsequently, the material was filtered through a #325 mesh to produce a lithium metal oxide with a single-particle structure of $LiNi_{0.76}Co_{0.01}Mn_{0.23}O_2$.

Preparation Example 2

Lithium metal oxide particles were prepared using the same method as that in Preparation Example 1, except that $NiSO_4$, $CoSO_4$, and $MnSO_4$ were mixed in a ratio of 0.8:0.12:0.08, respectively.

Preparation Example 3

Lithium metal oxide particles were prepared using the same method as that in Preparation Example 1, except that $NiSO_4$, $CoSO_4$, and $MnSO_4$ were mixed in a ratio of 0.85:0.05:0.1, respectively.

Preparation Example 4

Lithium metal oxide particles were prepared using the same method as that in Preparation Example 1, except that $NiSO_4$, $CoSO_4$, and $MnSO_4$ were mixed in a ratio of 0.8:0.15:0.05, respectively.

Preparation Example 5

Lithium metal oxide particles were prepared using the same method as that in Preparation Example 1, except that $NiSO_4$, $CoSO_4$, and $MnSO_4$ were mixed in a ratio of 0.85:0.05:0.1, respectively, and the first maintaining was conducted at 780 °C for 6 hours.

Preparation Example 6

Lithium metal oxide particles were prepared using the same method as that Preparation Example 1, except that the first maintaining at 780°C for 12 hours was omitted.

Preparation Example 7

Lithium metal oxide particles were prepared using the same method as that in Preparation Example 1, except that the mixture containing lithium and the transition metal precursor was subject to a first maintaining at 780°C for 12 hours and a second maintaining at 900 °C for 6 hours.

Preparation Example 8

Lithium metal oxide particles were prepared using the same method as that in Preparation Example 1, except that $NiSO_4$ and $CoSO_4$ were mixed in a ratio of 0.8:0.2, respectively.

Preparation Example 9

Lithium metal oxide particles were prepared using the same method as that in Preparation Example 1, except that $NiSO_4$ and $MnSO_4$ were mixed in a ratio of 0.8:0.2, respectively.

Experimental Example 1: Measurement of amount of surface residual lithium

3g of the lithium metal oxide particles from each Preparation Example were weighed and placed into a 250 mL flask. After adding 150 g of deionized water, a magnetic bar was inserted and stirred at a rate of 60 rpm for 10 minutes. Subsequently, 100 g was taken after filtering using a vacuum flask. The taken solution was placed in an auto titrator container, and contents of $Li_2CO_3$ and LiOH in the solution was measured by auto-titrating with 0.1 N HCl according to a Wader Method. The measurement results are shown in Table 2 below.

Experimental Example 2: XRD Analysis

An XRD analysis was performed on the lithium metal oxide particles of Preparation Examples using the equipment and conditions shown in Table 1 below. The results of the XRD analysis of the lithium metal oxide particles of Prepared Examples were shown in Table 2 below to determine whether a peak was observed within a 2θ range of 20° to 22°.

[Tablel 1]

| Maker | PANalytical |
|---|---|
| Anode material | Cu |
| K-Alpha1 wavelength | 1.540598 Å |
| Generator voltage | 45 kV |
| Tube current | 40 mA |
| Scan Range | 10-120 ° |
| Scan step size | 0.0065° |
| Divergence slit | 1/4° |
| Antiscatter slit | 1/2° |

[Table 2]

| | amount of residual lithium (ppm) | detection of XRD 20-22° peak |
|---|---|---|
| Preparation Example 1 | 4507 | X |
| Preparation Example 2 | 4216 | X |
| Preparation Example 3 | 4378 | X |
| Preparation Example 4 | 6211 | X |
| Preparation Example 5 | 10127 | X |
| Preparation Example 6 | 43918 | O |
| Preparation Example 7 | 8762 | X |
| Preparation Example 8 | 5214 | X |
| Preparation Example 9 | 4995 | X |

Example 1

(1) Fabrication of cathode

A cathode slurry was prepared by mixing the lithium metal oxide of Preparation Example 1, Denka Black as a conductive material, and PVDF as a binder in a mass ratio composition of 93:5:2. The cathode slurry was coated on an aluminum current collector, and then dried and pressed to form a cathode. The pressing was performed until a density of the cathode active material layer became 3.3 g/cc.

(2) Fabrication of half-cell

A lithium foil (thickness 1.2 mm) was prepared as an anode. The cathode and the anode were stacked by being notched into circular shapes having diameters of Φ14 and Φ16, respectively. An electrode cell was formed by interposing a separator (polyethylene, thickness 13 μm) notched to Φ19 between the cathode and anode. The electrode cell was placed in a coin cell outer casing having a diameter of 20 mm and a height of 1.6 mm, and assembled with injecting an electrolyte solution. The electrode was aged for at least 12 hours such that interiors of the electrodes were impregnated by the electrolyte solution. A 1M $LiPF_6$ solution in a mixed solvent of EC/EMC (30/70; volume ratio) was used as the electrolyte solution.

(3) Fabrication of full cell

An anode slurry containing 95 wt% of a mixture of natural/artificial graphite as a cathode active material, 3 wt% of a flake-type conductive material as a conductive material, 1 wt% of styrene-butadiene rubber (SBR) as a binder, and 1 wt% of carboxymethyl cellulose (CMC) as a thickener. The anode slurry was coated on a copper substrate, and the dried and pressed to form the anode.

The cathode and the anode were stacked by being notched into rectangular shapes of 240 mm X 85 mm, and 245 mm X 90 mm, respectively, and a separator (polyethylene, thickness 13 μm) was interposed in a zigzag shape between the cathode and the anode to form a 20 Ah electrode cell. The electrode cell was placed into an outer pouch having a fit dimension, three sides were sealed, an electrolyte solution was injected through a remaining side to assemble the cell. An aging was performed for at least 12 hours such that interiors of the electrodes were impregnated by the electrolyte solution. A 1M $LiPF_6$ solution in a mixed solvent of EC/EMC (20/80; volume ratio) was used as the electrolyte solution.

Examples 2 to 4 and Comparative Examples 1 to 4

Half-cells and full-cells were prepared by the same method as that in Example 1, except that the cathode active materials of Preparation Examples 2 to 5 (Examples 2 to 5) and Preparation Examples 6 to 9 (Comparative Examples 1 to 4) were each used instead of the cathode active material of Preparation Example 1.

Comparative Example 5

A half-cell and a full-cell were prepared by the same method as that in Example 1, except that the cathode was prepared by performing a press to obtain a density of 2.7 $g/cm^3$ of the cathode active material layer.

Evaluation of the half-cells and the full-cells of Examples and Comparative Examples as described in Experimental Example below, and the results are shown in Table 3.

Experimental Example 3: Evaluation on half-cell charge/discharge efficiency

(1) For the half-cells of Examples and Comparative Examples, charging (CC-CV 0.5 C 4.3V 0.005C CUT-OFF) and discharging (CC 0.5C 3.0V CUT-OFF) were defined as one cycle, and a charge/discharge efficiency ($E_{10}$) was calculated as a ratio of a charge capacity to a discharge capacity after repeating 10 cycles.
After further repeating 10 cycles of charging/discharging of the half-cells of Examples and Comparative Examples, a charge/discharge efficiency ($E_{20}$) was calculated using the same method.
(2) For the half cells of Examples and Comparative Examples, charging (CC-CV 0.5 C 4.3V 0.005C CUT-OFF) and discharging (CC 0.5C 3.0V CUT-OFF) were defined as one cycle, and a charge-discharge efficiency ($E_{50}$) was calculated as a ratio of a charge capacity to a discharge capacity after repeating 50 cycles.

After further repeating 10 cycles of charging/discharging of the half-cells of Examples and Comparative Examples, a charge/discharge efficiency ($E_{60}$) was calculated using the same method.

Experimental Example 4: Evaluation on full Cell high-temperature capacity retention

The full cells of Examples and Comparative Examples were each charged (CC-CV 0.1 C 4.3V 0.005C CUT-OFF) and discharged (CC 0.1C 3.0V CUT-OFF) in a 25°C chamber, and a battery capacity (an initial discharge capacity) was measured.

The above charging and discharging were defined as one cycle. After repeating 100 cycles of the charging and discharging for the full cells of Examples and Comparative Examples at a temperature of 60°C, a discharge capacity was measured. A high-temperature capacity retention was calculated by converting the measured discharge capacity divided by the initial discharge capacity into a percentage (%).

Experimental Example 5: Evaluation on full cell high-temperature storage property

The full cells of Examples and Comparative Examples were left in a 60 °C chamber for approximately 4 weeks, and then left at room temperature for 30 minutes followed by being placed in a chamber for measuring a gas generation. A vacuum was formed in the chamber, and then nitrogen gas was filled to create an atmospheric pressure. A volume of an injected nitrogen ($V_0$) and an internal chamber pressure ($P_0$) were measured. After forming a vacuum again at an inside of the chamber, a hole was drilled in the cell, and the internal chamber pressure ($P_1$) was measured. An amount of gas generation was calculated according to Formula 3 below.

[Formula 3]

$$\text{Amount of gas generation (mL)} = (V_0/P_0) * P_1$$

[Table 3]

| | evaluation of half-cell charging and discharging efficiency (%) | | | | | | high-temperature capacity retention (%) | gas generation (ml) |
|---|---|---|---|---|---|---|---|---|
| | $E_{10}$ | $E_{20}$ | $E_{10}$-$E_{20}$ | $E_{50}$ | $E_{60}$ | $E_{50}$-$E_{60}$ | | |
| Example 1 | 99.91 | 99.66 | 0.25 | 98.89 | 98.66 | 0.23 | 97 | 34.1 |
| Example 2 | 99.74 | 99.50 | 0.24 | 98.78 | 98.55 | 0.23 | 95 | 42.3 |
| Example 3 | 99.76 | 99.49 | 0.27 | 98.69 | 98.41 | 0.28 | 96 | 43.2 |
| Example 4 | 99.67 | 99.16 | 0.51 | 97.59 | 97.07 | 0.52 | 94 | 48.9 |
| Example 5 | 99.6 | 98.77 | 0.83 | 96.29 | 95.44 | 0.85 | 89 | 61.7 |
| Comparative Example 1 | 99.62 | 98.38 | 1.24 | 94.61 | 93.35 | 1.26 | 83 | 104.0 |
| Comparative Example 2 | 99.51 | 98.3 | 1.21 | 94.52 | 93.29 | 1.23 | 84 | 59.1 |
| Comparative Example 3 | 99.64 | 98.56 | 1.08 | 95.39 | 94.35 | 1.04 | 96 | 101 |
| Comparative Example 4 | 99.3 | 97.96 | 1.34 | 93.18 | 91.76 | 1.42 | 76 | 39.8 |
| Comparative Example 5 | 99.83 | 99.57 | 0.26 | 98.66 | 98.34 | 0.32 | 77 | 36.6 |

Referring to Table 3, the lithium secondary batteries of Examples included the cathode satisfying Formula 1, and maintained a high capacity during repeated charge-discharge cycles in the high-temperature environment. Additionally, the lithium secondary batteries of Examples caused reduced gas even when being stored for a long period in the high-temperature environment.

The lithium secondary batteries of Examples 4 and 5 included the cathode containing a cathode active material having a relatively high residual lithium content. Accordingly, battery life-span and high-temperature storage properties were slightly degraded compared to those from other Examples.

The lithium secondary batteries of Comparative Examples had $E_{20}$-$E_{10}$ and $E_{50}$-$E_{60}$ values exceeding 1% to have degraded storage properties in the high-temperature environment and decreased high-temperature capacity retention.

The lithium secondary battery of Comparative Example 3 had the cathode containing a cathode active material with an excessively high cobalt content to cause an excessive amount of gas generation from an inside of the battery in the high-temperature environment.

The lithium secondary battery of Comparative Example 4 had the cathode containing a cathode active material devoid of cobalt to cause a significant decrease in the capacity retention of the battery.

The lithium secondary battery of Comparative Example 5 had the cathode containing a cathode active material layer having a density less than 3 g/cm$^3$, and a contact area between the conductive material and the cathode active material particles decreased during repeated charging and discharging of the battery to cause a significant degradation of the life-span properties of the battery.

The above descriptions are merely examples applying the inventive concepts of the present disclosure, and other elements may be further included without departing from the scope of the present disclosure.

**Claims**

1. A cathode for a lithium secondary battery comprising a cathode active material layer that includes a cathode active material including a lithium metal oxide particle, wherein the lithium metal oxide particle includes cobalt and a content of cobalt is greater than 0, and less than or equal to 15 mol% based on total moles of elements excluding lithium and oxygen, and a density of the cathode active material layer is 3 g/cm$^3$ or more,

   wherein the cathode for a lithium secondary battery satisfies Formula 1 below:

$$[Formula\ 1]$$

$$(E_n\text{-}E_{n+10}) < 1\ \%$$

   (In Formula 1, $E_n$ is a charge and discharge efficiency (%) measured after repeating a charge and discharge cycle n times of a half-cell including an anode, the cathode for a lithium secondary battery, a separator and an electrolyte solution within an exterior material of a dimension having a diameter of 20 mm and a height of 1.6 mm, and $E_{n+10}$ is a charge and discharge efficiency (%) measured after repeating the charge and discharge cycle n+10 times of the half-cell,
   the charging and discharging cycle is performed by CC-CV charge under conditions of 0.5C CC 4.3V 0.05C CV cut, rest for 10 minutes, and CC discharge under 0.5C CC conditions,
   the anode is a lithium foil having a circular shape having a diameter of $\Phi$ 16 and a thickness of 1.2 $\mu$m, the cathode for a lithium secondary battery has a circular shape having a diameter of $\Phi$ 14, the separator is interposed between the anode and the cathode for a lithium secondary battery and is a polyethylene film having a thickness of 13 $\mu$m, and the electrolyte solution is prepared by dissolving 1M LiPF$_6$ in a mixed solvent including ethylene carbonate and ethylmethyl carbonate in a volume ratio of 3:7,
   the charge and discharge efficiency is defined as a percentage of a charge capacity to a discharge capacity measured after repeating the predetermined number of the charge and discharge cycles, and n is an integer of 5 to 100).

2. The cathode for a lithium secondary battery according to claim 1, the cathode for a lithium secondary battery satisfies Formula 2 below:

$$[Formula\ 2]$$

$$(E_n\text{-}E_{n+10}) \leq 0.3\%$$

3. The cathode for a lithium secondary battery according to claim 1, wherein the content of cobalt is in a range from 1 mol% to 12 mol% based on the total moles of elements excluding lithium and oxygen.

4. The cathode for a lithium secondary battery according to claim 1, wherein a total content of lithium carbonate (Li$_2$CO$_3$) and lithium hydroxide (LiOH) remaining on a surface of the lithium metal oxide particle is 5000 ppm or less.

5. The cathode for a lithium secondary battery according to claim 1, wherein the lithium metal oxide particle further includes nickel and manganese.

6. The cathode for a lithium secondary battery according to claim 5, wherein a content of nickel is in a range from 70 mol% to 95 mol% based on the total moles of elements excluding lithium and oxygen.

7. The cathode for a lithium secondary battery according to claim 5, wherein a content of manganese is in a range from 5 mol% to 30 mol% based on the total moles of elements excluding lithium and oxygen.

8. The cathode for a lithium secondary battery according to claim 1, wherein a peak is not observed within a 2θ range of 20° to 22° in a result of an X-ray diffraction (XRD) analysis of the lithium metal oxide particle.

9. The cathode for a lithium secondary battery according to claim 1, wherein when n is 5 to 20, $E_n$ is 99.7% or more.

10. The cathode for a lithium secondary battery according to claim 1, wherein when n is 5 to 20, $E_{n+10}$ is 99% or more.

11. The cathode for a lithium secondary battery according to claim 1, wherein when n is 45 to 60, $E_n$ is 89.5% or more.

12. The cathode for a lithium secondary battery according to claim 1, wherein when n is 45 to 60, $E_{n+10}$ is 88.6% or more.

13. The cathode for a lithium secondary battery according to claim 1, wherein a density of the cathode active material layer is in a range from 3.3 g/cm$^3$ to 5 g/cm$^3$.

14. A lithium secondary battery comprising the cathode for a lithium secondary battery according to claim 1; and an anode opposing the cathode.

# FIG. 1

100

110
105
110

# FIG. 2

107    127

I

150

160

I'

# FIG. 3

## INTERNATIONAL SEARCH REPORT

| International application No. |
| --- |
| **PCT/KR2024/014564** |

### A.   CLASSIFICATION OF SUBJECT MATTER

**H01M 4/131**(2010.01)i; **H01M 4/525**(2010.01)i; **H01M 4/505**(2010.01)i; **H01M 10/052**(2010.01)i; **H01M 4/02**(2006.01)i

According to International Patent Classification (IPC) or to both national classification and IPC

### B.   FIELDS SEARCHED

Minimum documentation searched (classification system followed by classification symbols)

H01M 4/131(2010.01); C01G 53/00(2006.01); H01M 10/052(2010.01); H01M 4/505(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극(cathode), 활물질(active material), 코발트(cobalt, Co), 밀도 (density), 이차전지(secondary battery)

### C.   DOCUMENTS CONSIDERED TO BE RELEVANT

| Category* | Citation of document, with indication, where appropriate, of the relevant passages | Relevant to claim No. |
| --- | --- | --- |
| Y | KR 10-2023-0085513 A (SK ON CO., LTD.) 14 June 2023 (2023-06-14)<br>    See claims 1, 2 and 11, and paragraphs [0041]-[0043] and [0110]-[0115]. | 1-14 |
| Y | JP 7082760 B2 (HITACHI METALS, LTD.) 09 June 2022 (2022-06-09)<br>    See claim 5. | 1-14 |
| A | KR 10-2023-0076797 A (LG CHEM, LTD.) 31 May 2023 (2023-05-31)<br>    See claims 1, 6, 8 and 11. | 1-14 |
| A | KR 10-2022-0113195 A (LG CHEM, LTD.) 12 August 2022 (2022-08-12)<br>    See claims 1, 5, 7, 10 and 11. | 1-14 |
| A | JP 2010-064944 A (SUMITOMO METAL MINING CO., LTD.) 25 March 2010 (2010-03-25)<br>    See claims 1, 3 and 5. | 1-14 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **09 January 2025** | **10 January 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| International application No. |
| --- |
| **PCT/KR2024/014564** |

| Patent document cited in search report | | | Publication date (day/month/year) | Patent family member(s) | | | Publication date (day/month/year) |
| --- | --- | --- | --- | --- | --- | --- | --- |
| KR | 10-2023-0085513 | A | 14 June 2023 | CN | 116247196 | A | 09 June 2023 |
| | | | | EP | 4194408 | A2 | 14 June 2023 |
| | | | | EP | 4194408 | A3 | 21 June 2023 |
| | | | | US | 2023-0178727 | A1 | 08 June 2023 |
| JP | 7082760 | B2 | 09 June 2022 | CN | 114270567 | A | 01 April 2022 |
| | | | | EP | 4027410 | A1 | 13 July 2022 |
| | | | | KR | 10-2022-0032592 | A | 15 March 2022 |
| | | | | KR | 10-2718013 | B1 | 15 October 2024 |
| | | | | US | 2022-0166019 | A1 | 26 May 2022 |
| | | | | WO | 2021-045025 | A1 | 11 March 2021 |
| KR | 10-2023-0076797 | A | 31 May 2023 | CA | 3207888 | A1 | 01 June 2023 |
| | | | | CN | 116867743 | A | 10 October 2023 |
| | | | | EP | 4282829 | A1 | 29 November 2023 |
| | | | | JP | 2024-510322 | A | 06 March 2024 |
| | | | | US | 2024-0120459 | A1 | 11 April 2024 |
| | | | | WO | 2023-096381 | A1 | 01 June 2023 |
| KR | 10-2022-0113195 | A | 12 August 2022 | CN | 116569360 | A | 08 August 2023 |
| | | | | EP | 4246627 | A1 | 20 September 2023 |
| | | | | JP | 2024-505835 | A | 08 February 2024 |
| | | | | JP | 7556616 | B2 | 26 September 2024 |
| | | | | US | 2023-0402598 | A1 | 14 December 2023 |
| | | | | WO | 2022-169270 | A1 | 11 August 2022 |
| JP | 2010-064944 | A | 25 March 2010 | JP | 5618116 | B2 | 05 November 2014 |

Form PCT/ISA/210 (patent family annex) (July 2022)